# EUROPEAN PATENT APPLICATION

(11) **EP 3 560 607 A1**
(43) Date of publication of application: **30.10.2019**
(21) Application number: 17882610.3
(22) Date of filing: 22.12.2017
(51) Int. Cl.: B05C 5/02, B05C 9/10, H01M 4/36, B01F 7/18, B01F 15/00, C01G 53/00, C01B 35/10, H01M 4/525, B05C 5/00

(54) **METHOD FOR PREPARING CATHODE ACTIVE MATERIAL FOR SECONDARY BATTERY AND APPARATUS FOR PREPARING CATHODE ACTIVE MATERIAL FOR SECONDARY BATTERY**

(30) Priority: 23.12.2016 KR 20160178330; 23.12.2016 KR 20160178499
(71) Applicant: POSCO, Nam-gu Pohang-si, Gyeongsangbuk-do 37859 (KR); Research Institute of Industrial Science & Technology, Pohang-si, Gyeongsangbuk-do 37673 (KR)
(72) Inventor: KIM, Young Sang, Incheon 21986 (KR); KIM, Do Hyeong, Pohang-si Gyeongsangbuk-do 37660 (KR); SONG, Jung Hoon, Seoul 06943 (KR); KIM, Junghoon, Incheon 22003 (KR); NAM, Sang Cheol, Seoul 02587 (KR); LEE, Sang Hyuk, Incheon 21647 (KR); PARK, Jung Woo, Incheon 21895 (KR)
(74) Representative: Potter Clarkson
(86) International application number: PCT/KR2017/015383
(87) International publication number: WO 2018/117748

(57) **Abstract**

A positive active material manufacturing method according to an exemplary embodiment of the present invention includes: a step of preparing a lithium-containing compound; a step of manufacturing a coating liquid including at least one coating element; a step of mixing the lithium-containing compound and the coating liquid to form a coating mixture of a clay or slurry state; and a step of agitating the coating mixture.
Further, a manufacturing apparatus of a positive active material according to an exemplary embodiment includes a rotation container, a cover, a nozzle, and an agitation wing.

## Description

### [Technical Field]

The present invention relates to a positive active material manufacturing method for a rechargeable battery and an active material manufacturing apparatus for a rechargeable battery.

### [Background Art]

A positive active material for a lithium rechargeable battery is a compound whose structural stability and capacity may be determined by a reversible intercalation and deintercalation reactions of lithium ions. These positive active materials are structurally altered by a lithium composition during the intercalation and deintercalation reactions of lithium ions. An anisotropic volume expansion occurs due to the structural change of the positive active material, which may result in micro-cracks in the positive active material. This causes structural damage to the positive active material, thereby lowering a charging / discharging efficiency of lithium and deteriorating a lifetime characteristic.

To solve this problem, a coating film may be formed on a positive active material surface. If the coating film is formed, it is possible to manufacture a high-lifetime lithium rechargeable battery because the positive active material structure is not collapsed even if it is used for a long time.

Generally, the method of forming the coating film on positive active material for the lithium rechargeable battery may be divided into a wet coating and a dry coating.

In the wet coating, a positive active material and a coating material are put into a solvent such as water or ethanol and are agitated, but a separate process is added to remove the solvent. In case of the dry coating, it is difficult to uniformly mix the coating material and the positive active material because no solvent is added.

Therefore, it is urgent to develop a technique to solve the problems that occur when the positive active material is produced by the wet coating and the dry coating, and to improve the uniformity of the coating.

### [Disclosure]

Exemplary embodiments of the present invention provide a positive active material manufacturing method and a positive active material manufacturing apparatus for a rechargeable battery for forming a uniform coating layer on a lithium-containing compound surface.

In addition, exemplary embodiments of the present invention provide a positive active material manufacturing method and a positive active material manufacturing apparatus for a rechargeable battery, which may mix raw materials and the coating material constituting the positive active material more efficiently while minimizing an amount of a solvent used.

A positive active material manufacturing method according to an exemplary embodiment of the present invention includes: a step of preparing a lithium-containing compound; a step of manufacturing a coating liquid including at least one coating element; a step of mixing the lithium-containing compound and the coating liquid to form a coating mixture of a clay or slurry state; and a step of agitating the coating mixture.

The step of forming the coating mixture may include a step of spraying the coating liquid to a mixer into which the lithium-containing compound is added.

After the step of spraying the coating liquid is finished, a weight ratio of the lithium-containing compound to the coating liquid may be 100:10 to 100:30.

A speed for spraying the coating liquid to the mixer may be 40 ml/min to 100 ml/min.

In the step of agitating the coating mixture, the mixer may be rotated.

The clay state or the slurry state may be formed by a rotation speed of a rotator of a coating apparatus.

The positive active material may have a structure in which a coating layer including an oxide compound is included in the lithium-containing compound surface.

The coating layer may have a thickness of greater than 0.001 micrometers and less than 1 micrometer.

An element contained in the oxide compound may have a concentration gradient that gradually decreases from the surface of the positive active material toward the center.

The positive active material manufacturing method may further include heat-treating the agitated coating mixture, and the heat treatment may be performed at a temperature of 200 degrees Celsius to 700 degrees Celsius for 3 hours to 10 hours.

The coating element included in the coating liquid may be at least one selected from a group consisting of Zr, Al, Na, K, Mg, Ca, Sr, Ni, Co, Ti, B, Sn, Mn, Cr, Fe, and V.

The coating liquid may include H₃BO₃ or a mixture of H₃BO₃ and TiO₂.

An active material manufacturing apparatus according to an exemplary embodiment of the present invention includes: a rotation container rotating itself in any one direction and receiving and flowing a raw material of at least one kind or more; a cover installed at an upper part of the rotation container and covering the rotation container; a nozzle installed at the upper end of the cover and spraying the coating solution to the raw material in the rotation container; and an agitation wing installed at the inner surface of the cover and rotated in the rotation container to agitate the raw material in the rotation container and the coating solution, wherein the rotation container is controlled at an angle in a range of 0 degrees to 45 degrees.

The raw material may include a positive active material of a rechargeable battery or a negative active material of a rechargeable battery.

The raw material may be formed of a powder in a dry or wet state.

The positive active material may include a nickel-cobalt-manganese (NCM) series including nickel (Ni) at 25-99 mol%, cobalt (Co) at 0.1-40 mol%, and manganese (Mn) at 0.1-40 mol%.

An opened part where a raw material may be added may be formed at the upper end of the rotation container.

A container supporter for supporting the rotation container to be rotatable may be installed at the lower part of the rotation container.

An opening/closing apparatus for opening and closing the cover may be installed at the cover.

The opening/closing apparatus may include a vertical coupling member coupled vertically to both sides of the upper end of the container supporter, and a cover opening/closing part coupled with the upper end of the cover and coupled between vertical coupling members to be rotatable by a hinge shaft.

A coupling hole where the nozzle is inserted and coupled may be formed at the upper end of the cover.

The nozzle may be connected to a coating solution storage vessel in which the coating solution is stored by a supply pipe, and the nozzle is attachable and detachable.

A pump for pressurizing and supplying the coating solution may be installed at the supply pipe, and the pump may be attachable and detachable.

The coating solution may include titanium (Ti), magnesium (Mg), and aluminum (Al) oxide series coating materials.

A ratio of a coating material to a solvent in the coating solution is 0.1 to 10 wt% of the coating material to 100 wt% of the solvent.

An agitation rotation shaft for rotating the agitation wing may be installed at the upper end of the cover, and a driving motor for driving the agitation rotation shaft may be installed at the agitation rotation shaft.

The agitation wing may be rotated in an opposite direction to a rotation direction of the rotation container.

The coating solution may include a titanium dioxide (TiO₂) or boric acid (H₃BO₃) solution which is dissolved in ethanol (EtOH), an inorganic solvent, an organic solvent, or water (H₂O).

The agitation wing may be installed in plural along a spiral line at the outer surface of the agitation rotation shaft.

The agitation wing may be installed radially on the outer surface of a circular plate member extending in an outer direction at the outer surface of the agitation rotation shaft.

An auxiliary blade formed to be protruded downward or upward at the upper surface or the lower surface of the agitation wing may be included.

According to exemplary embodiments of the present invention, as a post-treatment of the positive active material surface, by producing the coating layer on the positive active material surface, the structure of the positive active material is not collapsed even after prolonged use, which makes it possible to manufacture the lithium rechargeable battery with a long lifetime.

Also, by nozzle-spraying the coating material to the positive active material charged to the coating apparatus by a predetermined amount, a uniform coating layer may be formed on the positive active material surface.

Also, the active material manufacturing apparatus of the present exemplary embodiment may increase coating uniformity when forming the coating layer on the active material, and it is possible to mix the raw material constituting the active material and the coating material more efficiently while minimizing the amount of solvent used.

### [Description of the Drawings]

FIG. 1 is a flowchart showing a positive active material manufacturing method according to an exemplary embodiment of the present invention.
FIG. 2A and FIG. 2B are surface SEM (Scanning Electron Microscope) analysis photographs of a positive active material manufactured according to Comparative Example 1.
FIG. 3A and FIG. 3B are surface SEM analysis photographs of a positive active material according to a Comparative Example 2.
FIG. 4A and FIG. 4B are surface SEM analysis photographs of a positive active material manufactured according to Example 1.
FIG. 5A and FIG. 5B are surface SEM analysis photographs of a positive active material manufactured according to Example 2.
FIG. 6A and FIG. 6B are surface SEM analysis photographs of a positive active material manufactured according to Example 3.
FIG. 7 is a graph showing a TOF-SIMS (Time of Flight-Secondary Ion Mass Spectrometry) surface analysis result representing a case of semi-wet coating a lithium-containing compound with TiO₂.
FIG. 8 is an image mapping photograph of a powder itself according to an analysis result of FIG. 7.
FIG. 9 is an image mapping photograph of Ti according to an analysis result of FIG. 7.
FIG. 10 is a graph showing an enlarged result of Ti among an analysis result of FIG. 7.
FIG. 11 is a graph representing a TOF-SIMS (Time of Flight-Secondary Ion Mass Spectrometry) surface analysis result representing a case of semi-wet coating a lithium-containing compound with a material of which TiO₂ and H₃BO₃ are mixed.
FIG. 12 is an image mapping photograph of a powder itself according to an analysis result of FIG. 11.
FIG. 13 is an image mapping photograph of Ti according to an analysis result of FIG. 11.
FIG. 14 is an image mapping photograph of B according to an analysis result of FIG. 11.
FIG. 15 is a graph showing an enlarged result of B among an analysis result of FIG. 11.
FIG. 16 is a graph showing an enlarged result of Ti among an analysis result of FIG. 11.
FIG. 17 is a graph for comparing a dry H₃BO₃ coating with a TiO₂ semi-wet coating, and a semi-wet coating of a material of which TiO₂ and H₃BO₃ are mixed.
FIG. 18 is a graph showing an initial capacity (0.2C) measured for a lithium rechargeable battery half coin cell.
FIG. 19 is a graph representing a cycle lifetime measured for a lithium rechargeable battery half coin cell.
FIG. 20A to FIG. 20F are surface SEM analysis photographs of a positive active material manufactured according to Example 2 and Examples 4 to 8, respectively.
FIG. 21 is a view showing a state in which a cover is closed as a schematic diagram perspective view of an active material manufacturing apparatus for a rechargeable battery according to an exemplary embodiment of the present invention.
FIG. 22 is a view showing a state in which a cover is opened as a schematic diagram configuration view of an active material manufacturing apparatus for a rechargeable battery according to an exemplary embodiment of the present invention.
FIG. 23 is a view showing a state in which a cover is opened as a schematic diagram lateral view of an active material manufacturing apparatus for a rechargeable battery according to an exemplary embodiment of the present invention.
FIG. 24 is a view showing an agitation wing of a first example of an active material manufacturing apparatus for a rechargeable battery according to another exemplary embodiment of the present invention.
FIG. 25 is a view showing an agitation wing of a second example of an active material manufacturing apparatus for a rechargeable battery according to another exemplary embodiment of the present invention.
FIG. 26 is a view showing an agitation wing of a third example of an active material manufacturing apparatus for a rechargeable battery according to another exemplary embodiment of the present invention.
FIG. 27A and FIG. 27B are photographs of a positive coating material taken by a scanning electron microscope (SEM) for comparing states after and before coating according to an active material manufacturing apparatus for a rechargeable battery of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

For clarity of description of the present invention, parts that are unrelated to the description are omitted, and the same reference numbers will be used throughout this specification to refer to the same or like parts. In addition, the size and thickness of each configuration shown in the drawings are arbitrarily shown for better understanding and ease of description, but the present invention is not limited thereto. In addition, unless explicitly described to the contrary, the word "comprise" and variations such as "comprises" or "comprising" will be understood to imply the inclusion of stated elements but not the exclusion of any other elements.

A positive active material for a lithium rechargeable battery according to an exemplary embodiment of the present invention includes a coating layer including a lithium-containing compound and an oxide compound covering it. The lithium-containing compound is a lithium composite oxide including at least one among nickel, cobalt, and manganese, and the oxide compound includes at least one element selected from a group including Zr, Al, Na, K, Mg, Ca, Sr, Ni, Co, Ti, B, Sn, Mn, Cr, Fe, and V. Preferably, the oxide compound included in the coating layer may include H₃BO₃ or a mixture of H₃BO₃ and TiO₂.

In detail, the lithium-containing compound may be a compound represented by the following Formula 1 to Formula 13.

LiₓMn_{1-y}M'_{y}A₂ (1)

LiₓMn_{1-y}M'_{y}O_{2-z}X_{z} (2)

LiₓMn₂O_{4-z}X_{z} (3)

LiₓMn_{2-y}M'_{y}A₄ (4)

LiₓCo_{1-y}M'_{y}A₂ (5)

LiₓCoO_{2-z}X_{z} (6)

LixNii-yM'yA2 (7)

LiₓNiO_{2-z}X_{z} (8)

LiₓNi_{1-y}Co_{y}O_{2-z}X_{z} (9)

LiₓNi_{1-y-z}Co_{y}M'_{z}A_{α} (10)

LiₓNi_{1-y-z}Co_{y}M'_{z}O_{2-α}X_{α} (11)

LiₓNi_{1-y-z}Mn_{y}M'_{z}A_{α} (12)

LiₓNi_{1-y-z}Mn_{y}M'_{z}O_{2-α}X_{α} (13)

Herein, in the above-described Formulas, 0.95 ≤ x ≤1.1, 0 ≤ y ≤ 0.5, 0 ≤ z ≤ 0.5, 0 < α ≤ 2, M' is at least one element selected from a group consisting of Al, Ni, Co, Mn, Cr, Fe, Mg, Sr, V, Sc, Y, and lanthanide elements, A is at least one element selected from a group consisting of O, F, S, and P, and X is at least one selected from a group consisting of F, S, and P.

The lithium-containing compound may have a structure of a cubic phase, a hexagonal phase, or a monoclinic phase.

The coating layer may have a thickness from larger than about 0.01 micrometers to less than 1 micrometer. When having such a thickness range, the coating layer prevents the structure of the positive active material from collapsing, thereby achieving a long lifetime lithium rechargeable battery. The element containing in the oxide compound may have a concentration gradient that gradually decreases from the surface of the lithium-containing compound to the center of the coating layer.

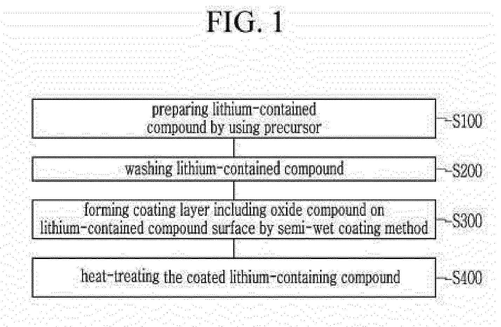

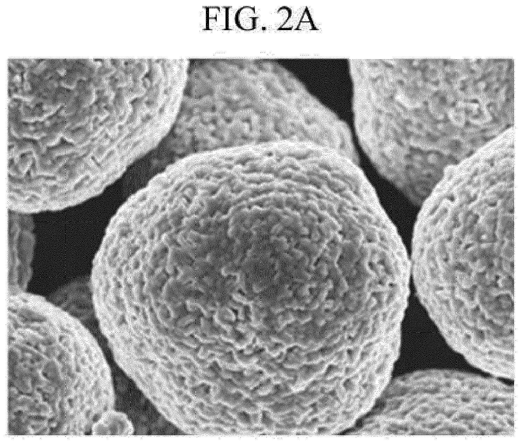

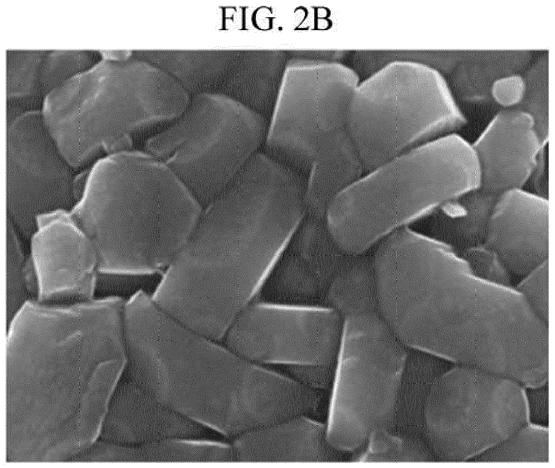

Hereinafter, a positive active material manufacturing method according to an exemplary embodiment of the present invention is described. FIG. 1 is a flowchart showing a positive active material manufacturing method according to an exemplary embodiment of the present invention. FIG. 2 is a SEM-EDS (Scanning Electron Microscope-Energy Dispersive X-ray Spectrometer) analysis photograph representing a case coating a lithium-containing compound with TiO₂.

Referring to FIG. 1, the positive active material manufacturing method according to an exemplary embodiment of the present invention includes a step of preparing a lithium-containing compound by using a precursor (S100).

At this time, the precursor contains 50 mol% to 99 mol% of nickel. The precursor may contain not only nickel but also at least one of cobalt and manganese, wherein the content of cobalt may be 0.1 mol% to 40 mol% and the content of manganese may be 0.1 mol% to 40 mol%.

The lithium compound is mixed with the precursor, and the mixture is heated at a high temperature of 500 degrees Celsius or higher and in an oxygen atmosphere to form a lithium-containing compound. In this case, the lithium compound may include lithium hydroxide (LiOH).

Then, the lithium-containing compound is washed (S200).

The water-treated lithium-containing compound is charged to a coating apparatus and coated with a material containing an oxide compound (S300).

At this time, the coating is performed by semi-wet coating. The semi-wet coating may be performed by charging/agitating the lithium-containing compound and the coating material in a solvent such as water or ethanol, thereby obtaining uniform coating. The semi-wet coating described in this specification refers to the formation of a coating mixture in a clay or slurry state by mixing the lithium-containing compound and a coating liquid. At this time, it is preferable to coat the surface of the lithium-containing compound by nozzle-spraying the coating liquid into the coating apparatus at a predetermined amount. The amount of the solvent mixed in the coating liquid is generally 1/10 of the volume used to form the coating solution.

In order to form the coating mixture in the clay or slurry state, a rotation speed of a rotator of the coating apparatus may be controlled. In other words, when agitating the lithium-containing compound and the coating liquid in the mixer, the state of the coating mixture may be confirmed while observing the rotation speed and torque of the rotator.

The lithium-containing compound is injected into the mixer of the coating apparatus, the coating liquid is sprayed to the mixer, and the speed at which the coating liquid is sprayed may be 40 ml/min to 100 ml/min. Once the coating liquid is all sprayed, the weight ratio of the lithium-containing compound to the coating liquid may be about 100:10 to 100:30.

In the step where the coating mixture is agitated, the mixer of the coating apparatus as well as the rotator described above may rotated. The mixer corresponds to a container in which the lithium-containing compound is injected and the coating liquid is sprayed. In the present exemplary embodiment, the mixing efficiency may be increased by rotating the mixer itself as well as the rotator.

The coating element included in the coating liquid may be at least one selected from the group consisting of Zr, Al, Na, K, Mg, Ca, Sr, Ni, Co, Ti, B, Sn, Mn, Cr, Fe, and V as above-described, and preferably, the oxide compound included in the coating layer may include H₃BO₃ or the mixture of H₃BO₃ and TiO₂.

Then, the coated lithium-containing compound is subjected to heat treatment (S400).

At this time, the temperature of the heat treatment is about 200 degrees Celsius to 700 degrees Celsius and the execution time is about 3 hours to 10 hours.

According to the present exemplary embodiment, the positive active material is formed by the semi-wet coating method, thereby minimizing the amount of the solvent used, reducing the generation of wastewater, and improving the lifetime of the positive active material.

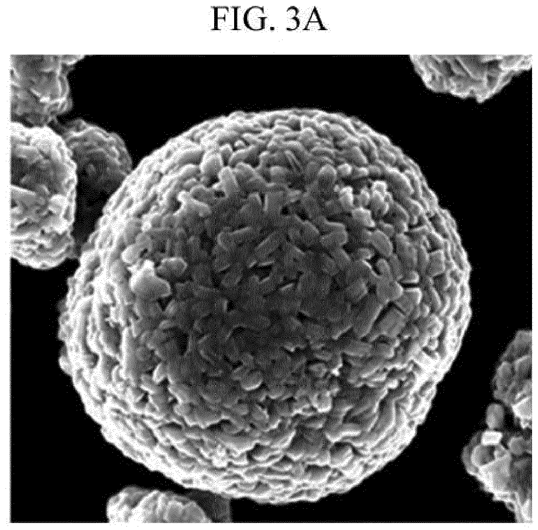

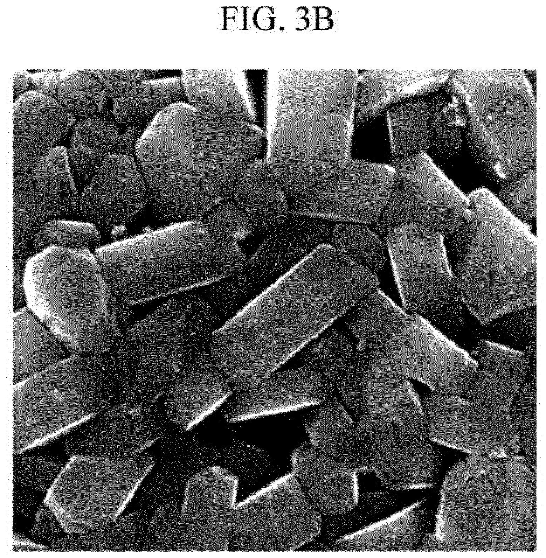

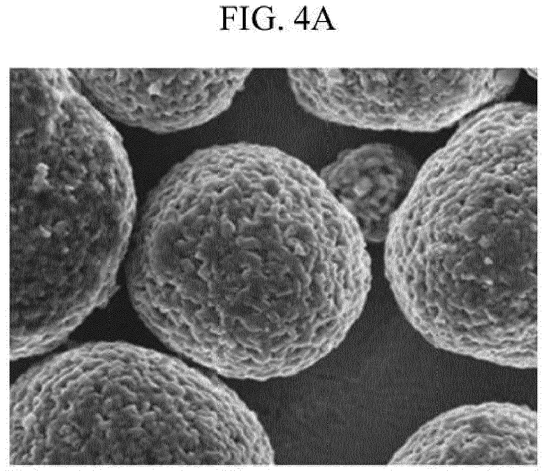

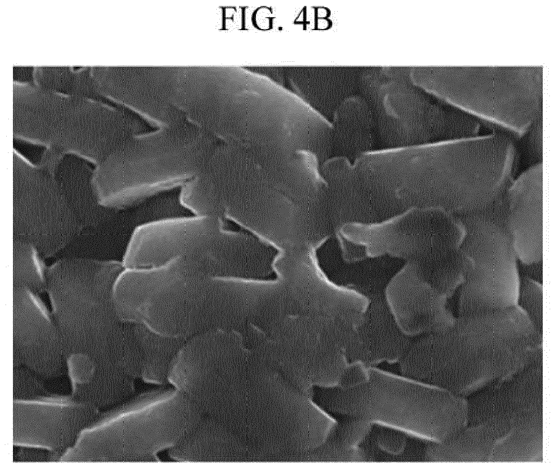

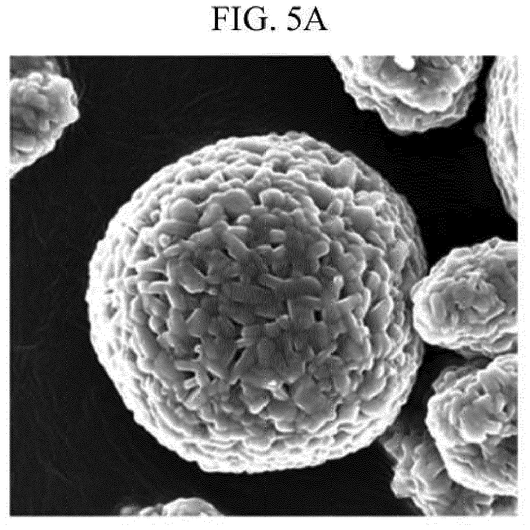

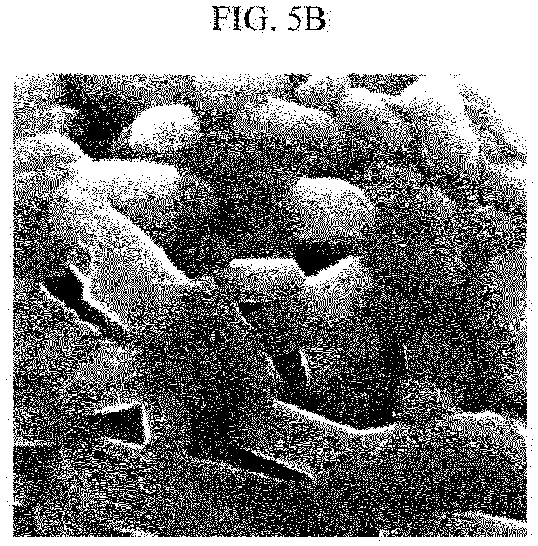

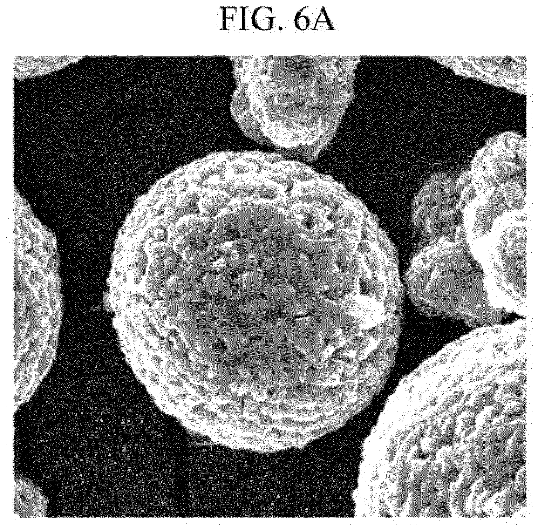

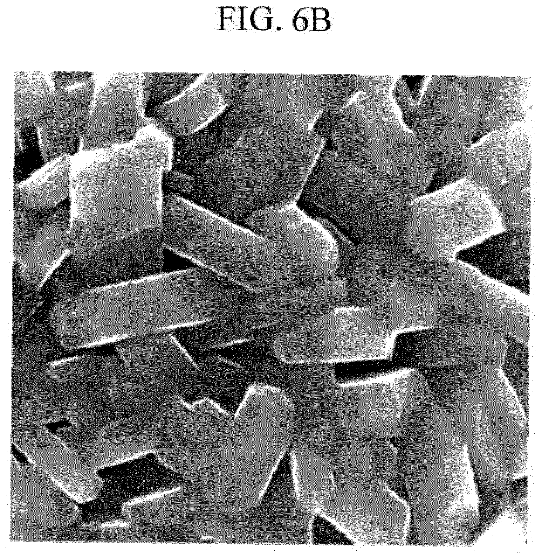

FIG. 2A and FIG. 2B are surface SEM (Scanning Electron Microscope) analysis photographs of a positive active material manufactured according to Comparative Example 1. FIG. 3A and FIG. 3B are surface SEM analysis photographs of a positive active material according to Comparative Example 2. FIG. 4A and FIG. 4B are surface SEM analysis photographs of a positive active material manufactured according to Example 1. FIG. 5A and FIG. 5B are surface SEM analysis photographs of a positive active material manufactured according to Example 2. FIG. 6A and FIG. 6B are surface SEM analysis photographs of a positive active material manufactured according to Example 3.

FIG. 2A to FIG. 6B show experimental results for the positive active material in which 88 mol% of nickel is included in the precursor of the lithium-containing compound. In the case of FIG. 2A and FIG. 2B, since no coating is applied to the lithium-containing compound, a micro-crack may be generated due to a structural change of the positive active material. Referring to 3A and FIG. 3B, when the coating layer is formed on the surface of the lithium-containing compound by the dry coating, there is a problem that the coating itself becomes uneven.

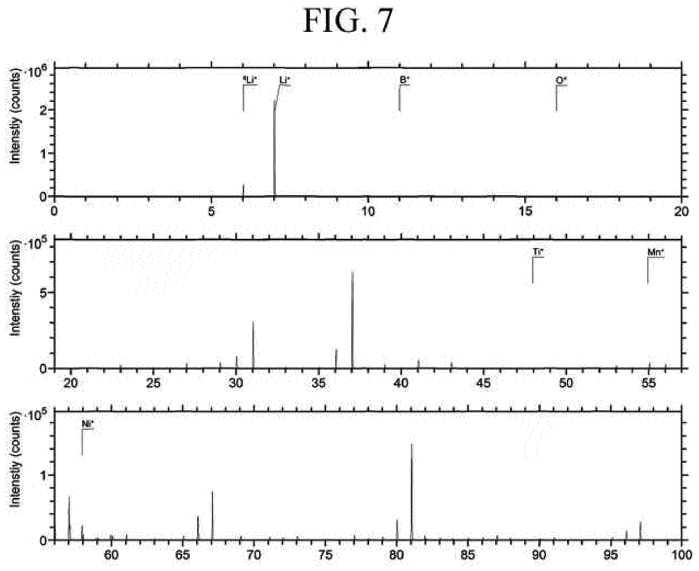

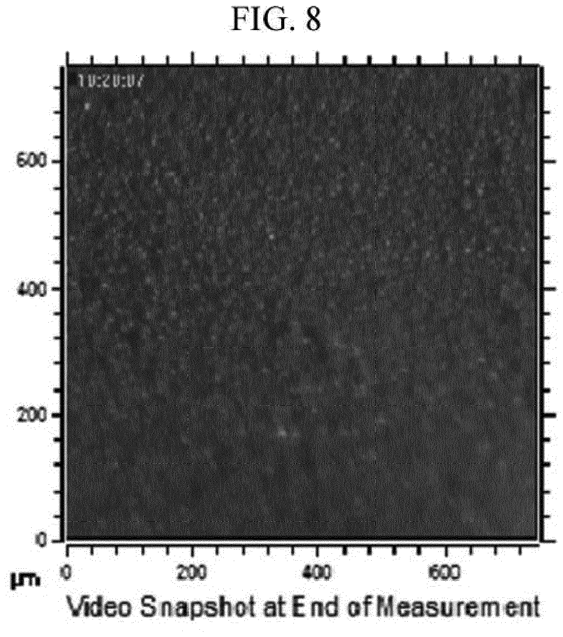

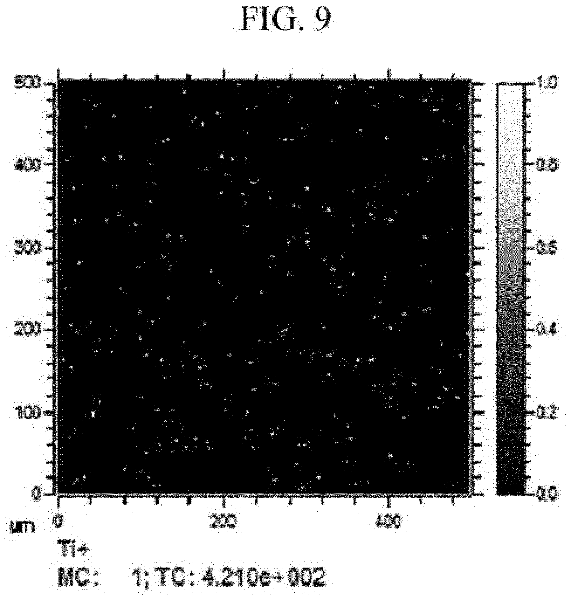

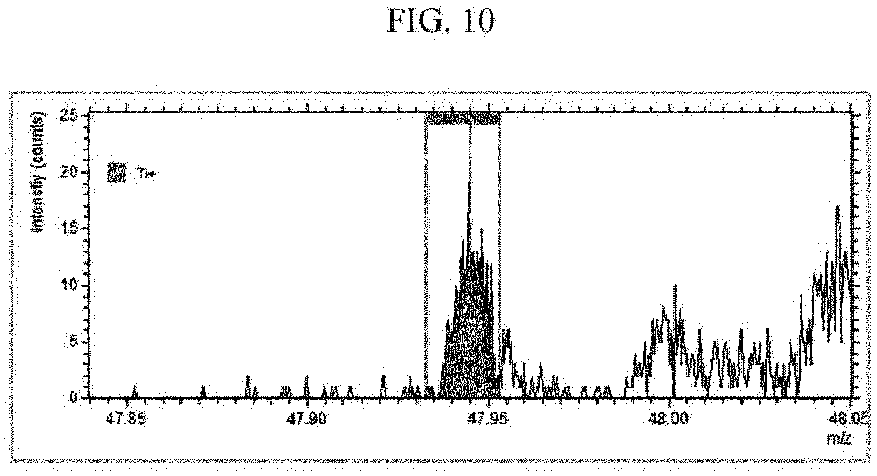

FIG. 7 is a graph showing a TOF-SIMS (Time of Flight-Secondary Ion Mass Spectrometry) surface analysis result representing a case of semi-wet coating of a lithium-containing compound with TiO₂. FIG. 8 is an image mapping photograph of a powder itself according to an analysis result of FIG. 7. FIG. 9 is an image mapping photograph of Ti according to an analysis result of FIG. 7. FIG. 10 is a graph showing an enlarged result of Ti among an analysis result of FIG. 7.

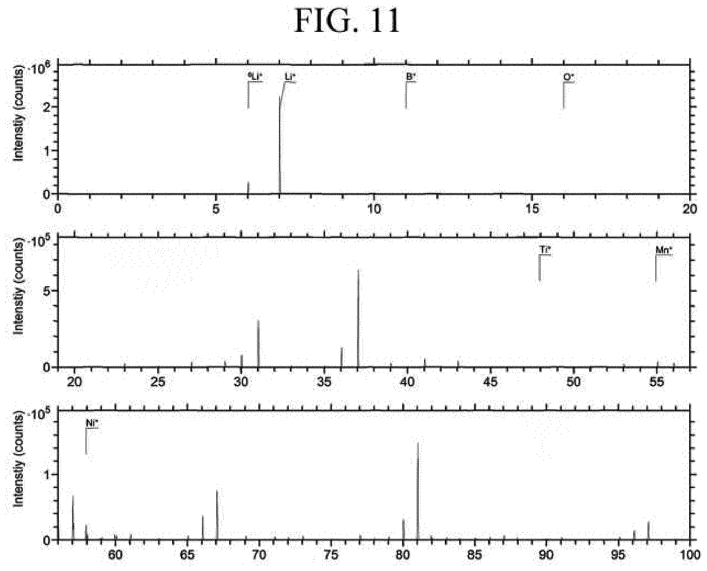

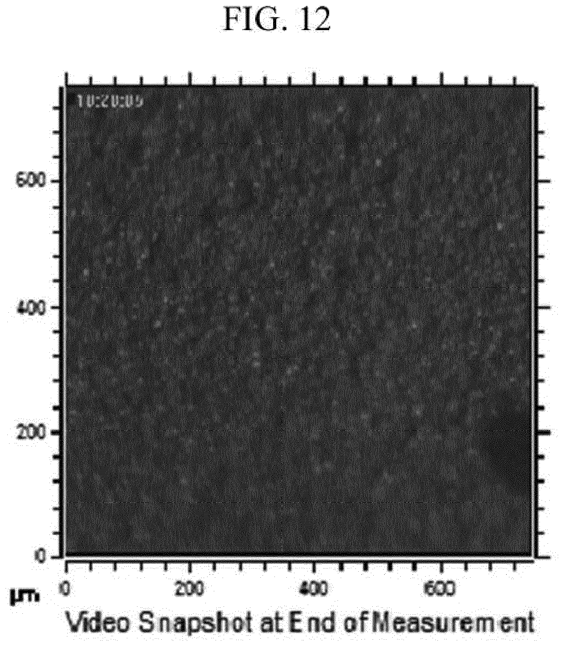

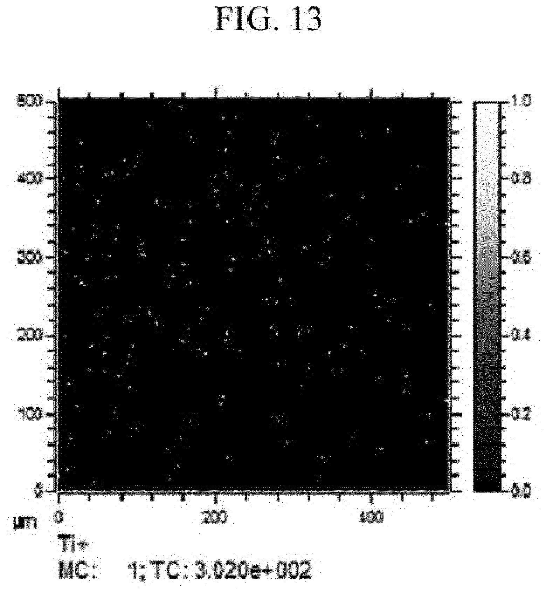

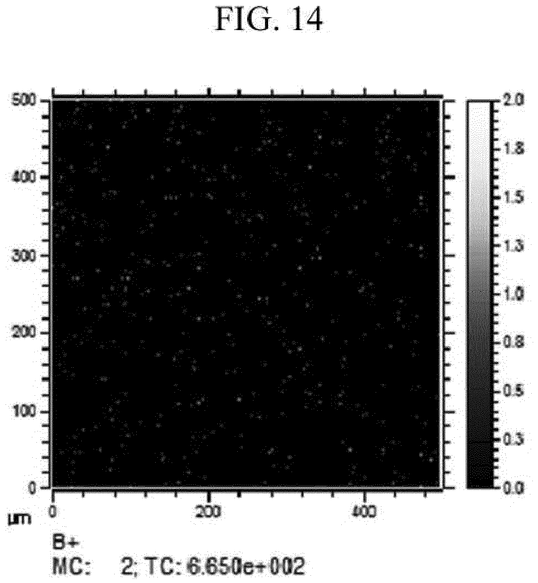

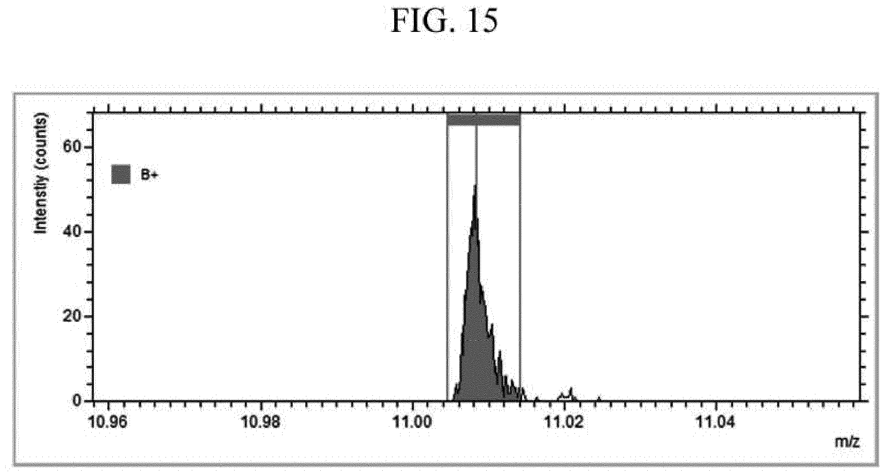

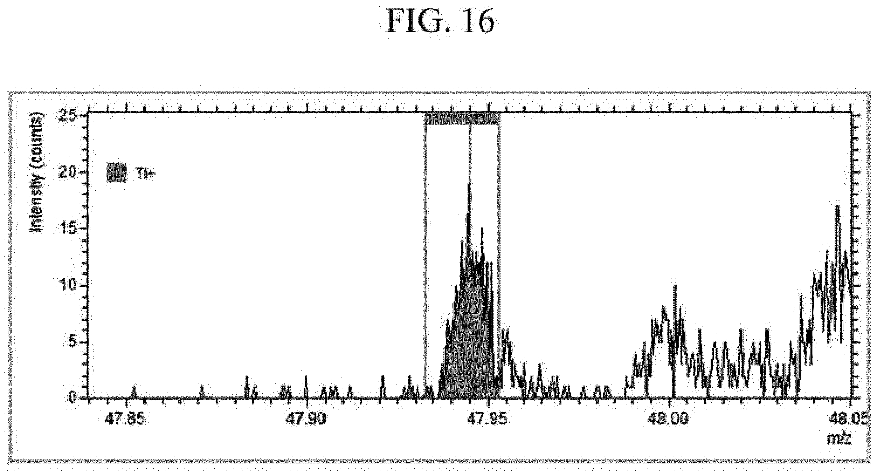

FIG. 11 is a graph representing a TOF-SIMS (Time of Flight-Secondary Ion Mass Spectrometry) surface analysis result representing a case of semi-wet coating a lithium-containing compound with a material of which TiO₂ and H₃BO₃ are mixed. FIG. 12 is an image mapping photograph of a powder itself according to an analysis result of FIG. 11. FIG. 13 is an image mapping photograph of Ti according to an analysis result of FIG. 11. FIG. 14 is an image mapping photograph of B according to an analysis result of FIG. 11. FIG. 15 is a graph showing an enlarged result of B among an analysis result of FIG. 11. FIG. 16 is a graph showing an enlarged result of Ti among an analysis result of FIG. 11.

FIG. 4 to FIG. 6 represent the positive active material according to an exemplary embodiment of the present invention, respectively, and referring to FIG. 7 to FIG. 10, it may be confirmed that the lithium-containing compound is semi-wet coated with TiO₂ through a component analysis. Also, the coating layer covering the positive active material and formed of the material mixture of TiO₂ and H₃BO₃ may be confirmed through FIG. 11 to FIG. 16.

Next, a manufacturing apparatus of a positive active material according to an exemplary embodiment is described.

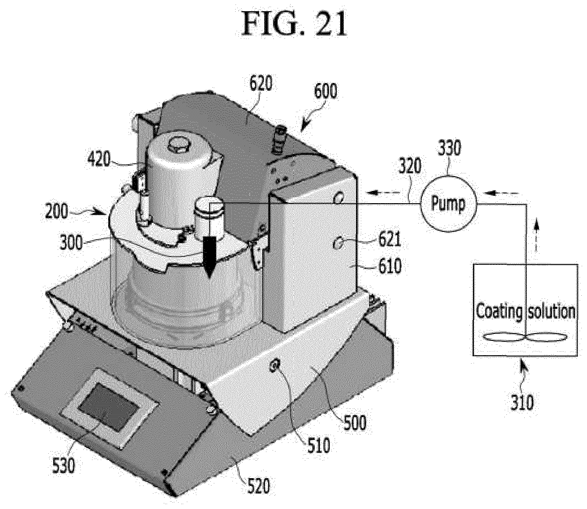

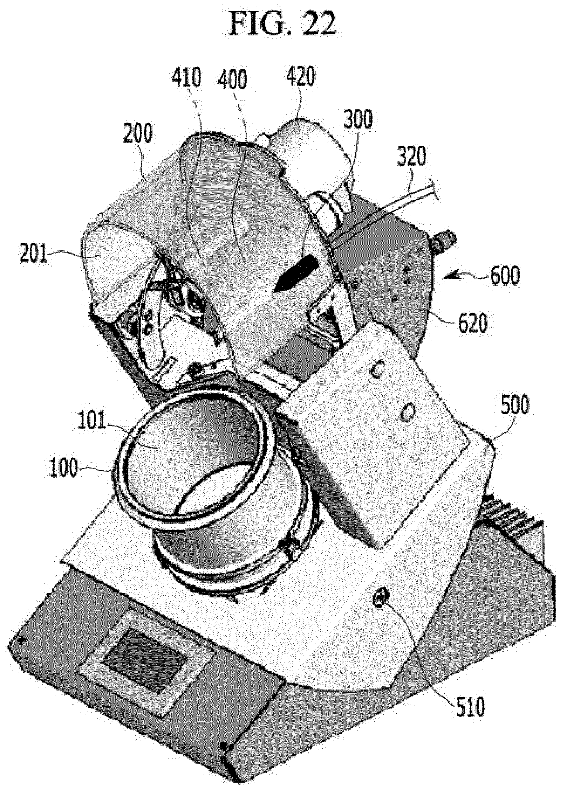

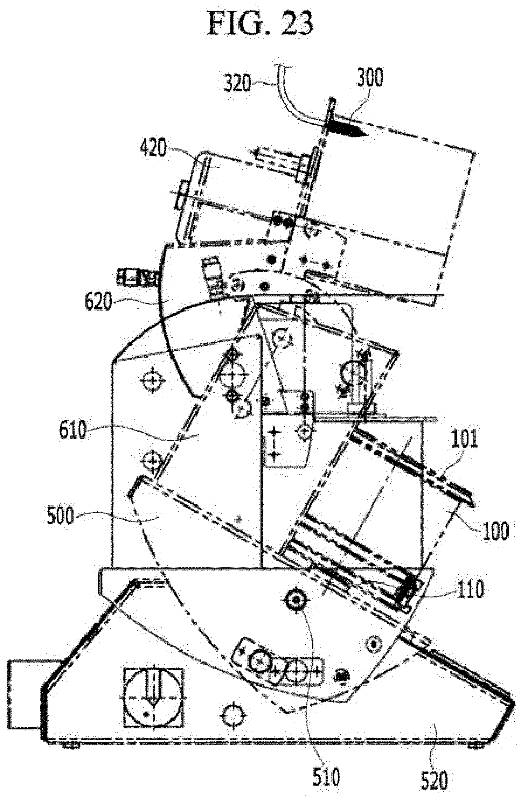

FIG. 21 is a view showing a state in which a cover is closed as a schematic diagram perspective view of an active material manufacturing apparatus for a rechargeable battery according to an exemplary embodiment of the present invention, FIG. 22 is a view showing a state in which a cover is opened as a schematic diagram configuration view of an active material manufacturing apparatus for a rechargeable battery according to an exemplary embodiment of the present invention, and FIG. 23 is a view showing a state in which a cover is opened as a schematic diagram lateral view of an active material manufacturing apparatus for a rechargeable battery according to an exemplary embodiment of the present invention.

Referring to FIG. 21 to FIG. 23, an active material manufacturing apparatus for a rechargeable battery according to an exemplary embodiment of the present invention includes a rotation container 100, a cover 200, a nozzle 300, and an agitation wing 400.

The rotary container 100 is self-rotated in one direction, and accommodates and flows at least one kind of raw material to be mixed.

The cover 200 is installed on the top of the rotation container 100, and covers the rotation container 100 to be rotatable.

The nozzle 300 is installed at the upper end of the cover 200, and serves to spray the coating solution of the raw material into the rotation container 100.

The agitation wing 400 is installed on the inner surface of the cover 200, and is rotated within the rotation container 100 to agitate the raw material and the coating solution in the rotation container 100. The rotation container 100 may be controlled with an angle from 0 to 45 degrees. Since the angle of the rotation container is controlled as described above, it is possible to maximize the coating efficiency by adjusting the angle of agitation in the process of agitating the raw material and the coating solution according to a density, a specific surface area, and a weight of the material to be coated, that is, the raw material. For example, the agitation angle of the rotation container may be controlled within the range in the direction A of FIG. 23.

The raw material may include the positive active material of the rechargeable battery or a negative active material of a rechargeable battery.

The raw material may be formed as a powder type of a dry or wet state to be mixed with the coating solution so as to be manufactured in the slurry state.

When the raw material is the positive active material, the positive active material may include nickel-cobalt-manganese (NCM) series including nickel (Ni) at 25-99 mol%, cobalt (Co) at 0.1-40 mol%, and manganese (Mn) at 0.1-40 mol%. The positive active material may contain at least one of the compounds represented by the following Formulas 1 to 13.

LiₓMn_{1-y}M'_{y}A₂ (1)

LiₓMn_{1-y}M'_{y}O_{2-z}X_{z} (2)

LiₓMn₂O_{4-z}X_{z} (3)

LiₓMn_{2-y}M'_{y}A₄ (4)

LiₓCo_{1-y}M'_{y}A₂ (5)

LiₓCoO_{2-z}X_{z} (6)

LixNii-yM'yA2 (7)

LiₓNiO_{2-z}X_{z} (8)

LiₓNi_{1-y}Co_{y}O_{2-z}X_{z} (9)

LiₓNi_{1-y-z}Co_{y}M'_{z}A_{α} (10)

LiₓNi_{1-y-z}Co_{y}M'_{z}O_{2-α}X_{α} (11)

LiₓNi_{1-y-z}Mn_{y}M'_{z}A_{α} (12)

LiₓNi_{1-y-z}Mn_{y}M'_{z}O_{2-α}X_{α} (13)

In above Formulas 1 to 13, 0.95 ≤ x ≤ 1.1, 0 ≤ y ≤ 0.5, 0 ≤ z ≤ 0.5, 0 < α ≤ 2, M' is at least one element selected from the group consisting of Al, Ni, Co, Mn, Cr, Fe, Mg, Sr, V, Sc, Y, and lanthanide elements, A is at least one element selected from the group consisting of O, F, S, and P, and X is at least one selected from the group consisting of F, S, and P.

Specifically, the positive active material may be manufactured by using a first metal salt aqueous solution and a second metal salt aqueous solution. The first metal salt aqueous solution and the second metal salt aqueous solution may each contain Ni, Co, and Mn as a metal salt.

To manufacture the positive active material, for example, the first metal salt aqueous solution is prepared, a chelating agent, a basic aqueous solution, and the second metal salt aqueous solution are injected in the reactor to be reacted, and the precursor including Ni at 50-99 mol%, Co at 0.1-40 mol%, and Mn at 0.1-40 mol% is finally obtained. Next, the obtained precursor is mixed with lithium hydroxide (LiOH) with a mole ratio of precursor to lithium hydroxide = 1:0.99-1.07 and fired in an oxygen atmosphere for 8-15 hours at 700-750 °C.

Meanwhile, the rotation container 100 may be formed in a cylindrical shape or the like for easy rotation.

A container rotation shaft 110 for rotating the rotation container 100 is installed at the lower end of the rotation container 100, and the rotation container 100 may be installed to be rotatable in a clockwise or counterclockwise direction about the container rotation shaft 110.

The container rotation shaft 110 may include a driving motor (not shown) for driving the container rotation shaft 110.

The upper end of the rotation container 100 may be formed with an opened part 101 into which the raw material may be injected.

A container supporter 500 for supporting the rotation container 100 to be rotatable may be installed at the lower part of the rotation container 100, and a hinge shaft 510 for rotating the rotation container 100 at a predetermined angle may be installed on the container supporter 500.

A base body 520 supporting the container supporter 500 may be installed at the lower part of the container supporter 500.

The cover 200 may be formed in a cylindrical shape or the like for easy rotation of the rotation container 100. Also, the circumferential surface of the cover 200 may be formed of a transparent material for easy observation of the inside of the cover 200.

Meanwhile, the inside of the cover 200 is formed as a hollow for the insertion of the rotation container, and an opened part 201 for the insertion and coupling of the rotation container 100 may be formed at the lower end of the cover 200.

An opening/closing apparatus 600 may be installed for opening and closing the cover 200 on the cover 200 so that it is possible to open and close the opened part 101 of the rotation container 100.

The opening/closing apparatus 600 includes a vertical coupling member 610 vertically coupled on both sides of the upper end of the container supporter 500 and a cover opening/closing part 620 coupled to the upper end of the cover and additionally coupled between the vertical coupling member to be rotatable with a predetermined angle by a hinge shaft 621 for opening and closing the cover.

A coupling hole (not shown) to which the nozzle 300 is inserted to be coupled may be formed at the upper end of the cover 200.

A supply pipe 320 for supplying the coating solution stored in a coating solution storage vessel 310 to the nozzle 300 may be connected to the nozzle 300, and a pump 330 for pressing and supplying the coating solution of the coating solution storage vessel 310 to the nozzle 300 may be installed on the supply pipe 320. In this apparatus, at least one of the nozzle 300 and the pump 330 is attachable and detachable.

The supply pipe 320 may be made of a flexible pipe to flexibly accommodate the opening and closing of the cover 200.

The supply speed of the coating solution supplied to the nozzle 300 may be 40 to 100 ml/min for uniform mixing of the raw material and the coating solution.

Also, the weight ratio of the positive active material and the coating solution as a raw material at the time of the completion of the spraying of the coating solution may be a ratio of 100: 0 to 100:30.

The coating material of the coating solution may include one or two or more kinds selected from the group consisting of Ni, Co, Fe, Mn, V, Cr, Ti, Ta, Ma, B, Mg, Al, Cr, V, Ti, Fe, Zr, Zn, Si, Y, Nb, Ga, Sn, Mo, and W, and in addition to these, other coating-capable materials may be included.

The coating solution may include, for example, titanium dioxide (TiO₂) or a boric acid (H3BO3) solution dissolved in ethanol (EtOH), an inorganic solvent, an organic solvent, or water (H₂O). Here, the kinds of the inorganic solvent and the organic solvent are not particularly limited.

In the coating solution, the ratio of the coating material to the solvent may be 0.1 to 50 wt%, more specifically 1 to 10 wt%, of the coating material to 100 wt% of the solvent.

In addition, an agitation rotation shaft 410 for rotating the agitation wing 400 in one direction may be installed at the upper end of the cover 200, and the agitation wing 400 may be installed to be rotatable in the other direction (a clockwise direction or a counterclockwise direction based on the agitation rotation shaft 410.

Multiple agitation wings 400 may be installed at a predetermined interval in the radial direction with reference to the agitation rotation shaft 410.

A driving motor 420 for driving of the agitation rotation shaft may be installed on the agitation rotation shaft 410.

The agitation wing 400 may be rotated in the same direction as the rotation direction of the rotation container 100, or may be rotated in the opposite direction to the rotation direction of the rotation container 100 for efficient mixing of the raw material and the coating solution.

Further, an operation control unit 530 for displaying and controlling the rotation operation and the like of the rotation container 100, the agitation wing 400, the pressure pump 330, the cover opening/closing part 620, and the container supporter 500 may be installed on the base body 520.

Hereinafter, the operation of an active material manufacturing apparatus for a rechargeable battery according to an exemplary embodiment of the present invention is described with reference to FIG. 21 to FIG. 23.

First, as shown in FIG. 22, the cover 200 is opened by using the cover opening/closing part 620 of the opening/closing apparatus 600 so that the opened part 101 of the rotation container 100 is exposed.

In this case, the rotation container 100 is rotated by the predetermined angle based on the container supporter 500 and the hinge shaft 510 to be disposed obliquely with respect to the base body 520. The reason why the rotation container 100 is inclined with respect to the base body 520 as described above is to easily charge the raw material into the opened part 101 of the rotation container 100.

Next, the positive active material of the rechargeable battery as the raw material, which includes the NCM (nickel-cobalt-manganese) series, for example, including nickel (Ni) at 25-99 mol%, cobalt (Co) at 0.1-40 mol%, and manganese (Mn) at 0.1-40 mol% and at least one among the compounds representing following Formulas 1 to 13, is charged in the rotation container 100 through the opened part 101 of the rotation container 100. In this case, the charged raw material is formed of the powder type of the dry state so that the positive active material of the rechargeable battery is mixed with the coating solution to be formed of the slurry state.

LiₓMn_{1-y}M'_{y}A₂ (1)

LiₓMn_{1-y}M'_{y}O_{2-z}X_{z} (2)

LiₓMn₂O_{4-z}X_{z} (3)

LiₓMn_{2-y}M'_{y}A₄ (4)

LiₓCo_{1-y}M'_{y}A₂ (5)

LiₓCoO_{2-z}X_{z} (6)

LixNii-yM'yA2 (7)

LiₓNiO_{2-z}X_{z} (8)

LiₓNi_{1-y}Co_{y}O_{2-z}X_{z} (9)

LiₓNi_{1-y-z}Co_{y}M'_{z}A_{α} (10)

LiₓNi_{1-y-z}Co_{y}M'_{z}O_{2-α}X_{α} (11)

LiₓNi_{1-y-z}Mn_{y}M'_{z}A_{α} (12)

LiₓNi_{1-y-z}Mn_{y}M'_{z}O_{2-α}X_{α} (13)

In above Formulas 1 to 13, 0.95 ≤ x ≤ 1.1, 0 ≤ y ≤ 0.5, 0 ≤ z ≤ 0.5, 0 < α ≤ 2, M' is at least one element selected from the group consisting of Al, Ni, Co, Mn, Cr, Fe, Mg, Sr, V, Sc, Y, and lanthanide elements, A is at least one element selected from the group consisting of O, F, S, and P, and X is at least one selected from the group consisting of F, S, and P.

If the charging of the raw material (the positive active material of the rechargeable battery) in the rotation container 100 is completed, as shown in FIG. 21, the cover 200 is closed by using the cover opening/closing part 620 of the opening/closing apparatus 600 such that the rotation container 100 is completely covered inside the cover 200.

In this state, by operating the operation control unit 530, the driving motor of the rotation container 100 and the driving motor 420 of the agitation wing 400 are driven such that the rotation container 100 and the agitation wing 400 are simultaneously rotated. At this time, the rotation direction of the rotation container 100 and the rotation direction of the agitation wing 400 are reversed so that the raw material and the coating solution can be effectively mixed.

The rotation container 100 may be rotated by the container rotation shaft supported by the container supporter 500 installed at the lower part thereof and the agitation wing 400 may be rotated simultaneously with the rotation container 100 by the agitation rotation shaft 410 installed at the upper end of the cover 200 separately from the rotation container 100.

Also, by operating the operation control unit 530 to drive the pressure pump 330, the coating solution (Ti, Mg, and Al oxide series) stored in the coating solution storage vessel 310 is supplied to the nozzle through the supply pipe 320 and the coating solution is sprayed to the inside of the rotation container through the nozzle. In this case, the coating solution is supplied at the supply speed of 40 to 100 ml/min, and the weight ratio of the positive active material and the coating solution at the end time of the spraying of the coating solution is a 100:10 to 100:30 ratio.

As above-described, unlike a conventional mixer, in the present invention, while simultaneously rotating the rotation container 100 and the agitation wing 400, the positive active material and the coating solution of the powder type for the rechargeable battery are mixed in the rotation container 100.

Therefore, since the rotating rotation container 100 serves to flow the positive active material for the rechargeable battery of the powder type, and the rotating agitation wing 400 serves to mix the positive active material for the rechargeable battery with the coating solution, the flow role of the positive active material for the rechargeable battery and the mix role of the positive active material for the rechargeable battery are separately performed.

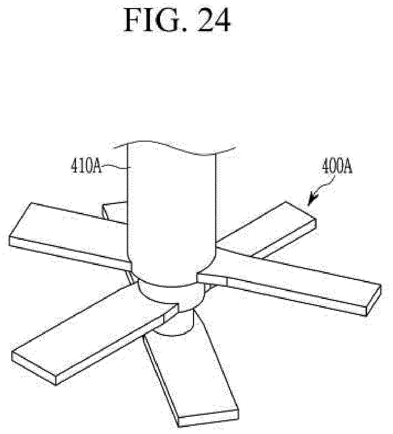

FIG. 24 is a view showing an agitation wing of a first example of an active material manufacturing apparatus for a rechargeable battery according to another exemplary embodiment of the present invention.

The agitation wing of the first example of the active material manufacturing apparatus for the rechargeable battery according to an embodiment of the present invention is the same as that of the active material manufacturing apparatus for the rechargeable battery according to an embodiment of the present invention described above except for matters specifically described below, so a detailed description thereof is omitted.

The agitation wing 400A of the first example may be installed along the spiral line on the outer surface of an agitation rotation shaft 410A. The agitation wing 400A may be formed to be quadrangular, triangular, cylindrical, or the like.

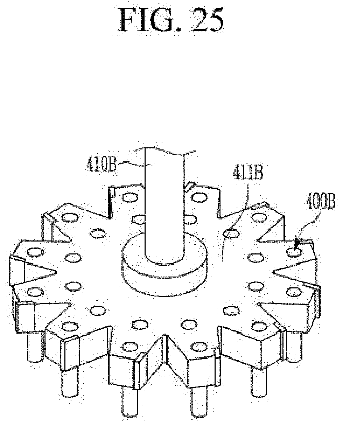

FIG. 25 is a view showing an agitation wing of a second example of an active material manufacturing apparatus for a rechargeable battery according to another exemplary embodiment of the present invention.

The agitation wing of the second example of the active material manufacturing apparatus for the rechargeable battery according to an embodiment of the present invention is the same as that of the active material manufacturing apparatus for the rechargeable battery according to an embodiment of the present invention described above except for the matters specifically described below, so a detailed description thereof is omitted.

The agitation wing 400B of the second example may be radially installed in plural with a constant interval or a predetermined interval on the outer surface of a circular plate member 411B extending in the outer direction on the outer surface of the agitation rotation shaft 410B.

The agitation wing 400B may be formed in a quadrangular shape or a rhombus shape.

In addition, the agitation wing 400B may include an auxiliary blade 401B protruding upward or downward from the upper surface or the lower surface. Further, the agitation wing 400B may include an auxiliary blade 401B protruding upward or downward from the upper surface or the lower surface of the agitation wing 400B.

The auxiliary blade 401B may be formed in a cylindrical shape, a bolt shape, or the like.

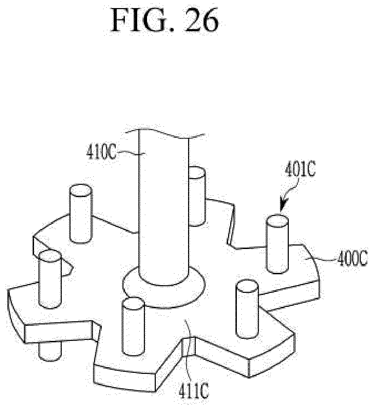

FIG. 26 is a view showing an agitation wing of a third example of an active material manufacturing apparatus for a rechargeable battery according to another exemplary embodiment of the present invention.

The agitation wing of the third example of the active material manufacturing apparatus for the rechargeable battery according to an embodiment of the present invention is the same as that of the agitation wing of the second example of the active material manufacturing apparatus for the rechargeable battery according to an embodiment of the present invention described above except for the matters specifically described below, so a detailed description thereof is omitted.

The agitation wing 400C of the third example may be radially installed in plural with a constant interval or a predetermined interval on the outer surface of a circular plate member 411C extending in the outer direction on the outer surface of the agitation rotation shaft 410C.

Further, an auxiliary blade 401C protruding upward or downward from the upper surface or the lower surface of the agitation wing 400C may be further included.

The auxiliary blades 401C may be formed with a length that protrudes upward from the upper surface and a length that protrudes downward from the lower surface to be different, or they may have the same length.

### [Detailed Description of the Present Invention]

Hereinafter, detailed examples of the positive active material manufacturing method and the lithium rechargeable battery manufacturing method as above-described are described.

### Example 1

### 1. Manufacturing of a positive active material formed with a coating layer

### (1) Manufacturing of a positive active material

### 1) Manufacturing of a metal salt aqueous solution

The first and second metal salt aqueous solutions of which Ni, Co, and Mn concentrations are different were prepared.

The first metal salt aqueous solution for core part formation is manufactured so that raw materials of each element are mixed to satisfy a stoichiometric mole ratio of (Ni_{0.98}Co_{0.01}Mn_{0.01}) (OH)₂ in distilled water, and a mole concentration of an entire metal salt is 2.5M.

Independently, the second metal salt aqueous solution for shell part formation is manufactured so that raw materials of each element are mixed to satisfy a stoichiometric mole ratio of (Ni_{0.64}Co_{0.23}Mn_{0.13}) (OH)2 in distilled water, and a mole concentration of an entire metal salt is 2.5M.

### 2) Co-precipitation process

A co-precipitation reactor in which two metal salt aqueous solution supply tanks are coupled in series is prepared, and the first metal salt aqueous solution and the second metal salt aqueous solution are respectively put into the metal salt aqueous solution supply tanks.

A co-precipitation compound is manufactured in the co-precipitation reactor by adjusting an input amount of the first and second metal salt aqueous solutions from the two metal salt aqueous solution supply tanks. Specifically, the co-precipitation compound is manufactured by initially adjusting the first metal salt aqueous solution to be injected into the co-precipitation reactor, and after passage of a certain time, the second metal salt aqueous solution is injected to the co-precipitation reactor.

### 3) Post-treatment process

A precipitate obtained according to a co-precipitation process is a filtrate, and is washed with water and then dried to manufacture a positive active material precursor particle. In this case, an average composition of the core part is Ni_{0.98}Co_{0.01}Mn_{0.01}, and a metal ion has a concentration gradient in the shell part.

Resultantly, large particle diameter and small particle diameter active material precursors having a composition of (Ni_{0.88}Co_{0.095}Mn_{0.025}) (OH)2 are obtained for all particles.

### 4) Mixing and firing process

LiOH·H₂O (SamJune Chemical, battery grade) as a lithium salt is respectively mixed with the large particle diameter and small particle diameter active material precursors obtained from 3) so that the mole ratio of the precursor to the lithium salt is 1:1.05 and fired to manufacture Li_{1.05}(Ni_{0.88}Co_{0.095}Mn_{0.025})O₂ of a large particle diameter sintered body and Li_{1.05}(Ni_{0.88}Co_{0.095}Mn_{0.025})O₂ of a small particle diameter sintered body.

Next, the large particle diameter and small particle diameter sintered bodies are mixed at a weight ratio of 8:2 and fired, then washed to manufacture the positive active material.

### (2) Manufacturing of a final positive active material

One kilogram of he positive active material manufactured in (1) is put into coating equipment and the coating equipment is operated.

In detail, a TiO₂ coating liquid dissolved in ethanol is continuously put into an agitator of the coating equipment and then sprayed by a nozzle by using a pump. Next, a heat treatment is performed at a temperature of about 200 degrees Celsius to 650 degrees Celsius for about 3 to 6 hours to finally manufacture the positive active material in which the coating layer including Ti is uniformly formed on the surface. In the final positive active material, Ti is coated at 500 ppm with respect to the entire coating layer, and the thickness of the coating layer is greater than about 0.1 nanometers and less than 500 nanometers. The input conditions of 1 kilogram of the positive active material put into the coating equipment are shown in Table 1 below.

**(Table 1)**

| Traveling speed of blade end | Coating solution transferring speed | Coating time |
|---|---|---|
| 1-50 m/s | 1-500 ml/min. | 10 s-30 min. |

### 2. Manufacturing of a lithium rechargeable battery

For a battery chemical evaluation, the positive active material in which the coating layer manufactured from above 1., a binder (polyvinylidene fluoride; PVDF), and a conductive material (Denka black) are uniformly mixed in a N-methyl-2-pyrrolidone solvent at the weight ratio of 92.5:3.5:4 to manufacture the slurry.
The manufactured slurry is uniformly coated to an aluminum foil and then pressed in a roll press, and is vacuum-dried in a vacuum oven for 12 hours to manufacture a positive electrode. A lithium metal is used as a facing electrode, a liquid electrolyte solution as a 1 mol LiPF₆ solution is used in a mixed solvent of ethylene carbonate (EC):ethyl methyl carbonate (EMC)=1:2 as an electrolyte solution, and a lithium rechargeable battery half-coin cell of the CR2032 standard is fabricated according to a general manufacturing method.

### Example 2

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including B is manufactured by the same method as (2) of Example 1 except for forming the coating layer by using a H₃BO₃ solution dissolved in water or ethanol as the coating liquid.

### 2. Manufacturing of a lithium rechargeable battery

A lithium rechargeable battery half coin cell of the CR2032 standard is manufactured by the same method as Example 1 (2) by using the positive active material formed with the coating layer including B.

### Example 3

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including both Ti and B is manufactured by the same method as (2) of Example 1 except for forming the coating layer by using a TiO₂ and H₃BO₃ solution dissolved in water or ethanol as the coating liquid.

### 2. Manufacturing of a lithium rechargeable battery

A lithium rechargeable battery half coin cell of CR2032 standard is manufactured by the same method as Example 1 (2) by using the positive active material formed with the coating layer including Ti and B.

### Comparative Example 1

A positive active material is manufactured in the same method as (1) of Example 1.

Finally, a positive active material is formed without forming a coating layer of a positive active material of Comparative Example 1.

### Comparative Example 2

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including B is manufactured through a heat treatment after dry-mixing a H₃BO₃ powder

### 2. Manufacturing of a lithium rechargeable battery

A lithium rechargeable battery half coin cell of the CR2032 standard is manufactured by the same method as Example 1 (2) by using the positive active material formed with the coating layer including B.

### Experimental Example 1

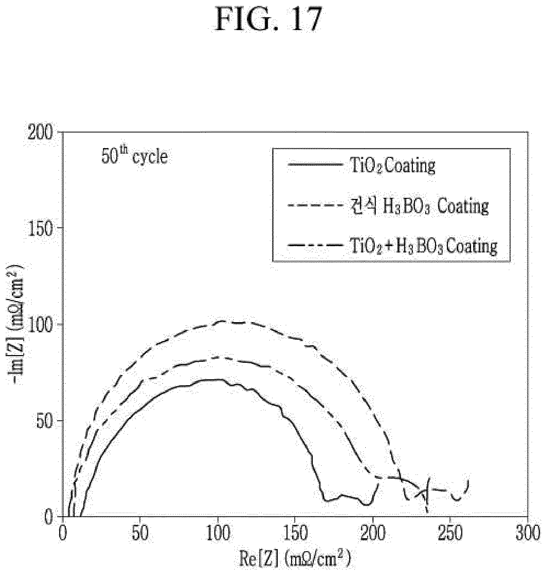

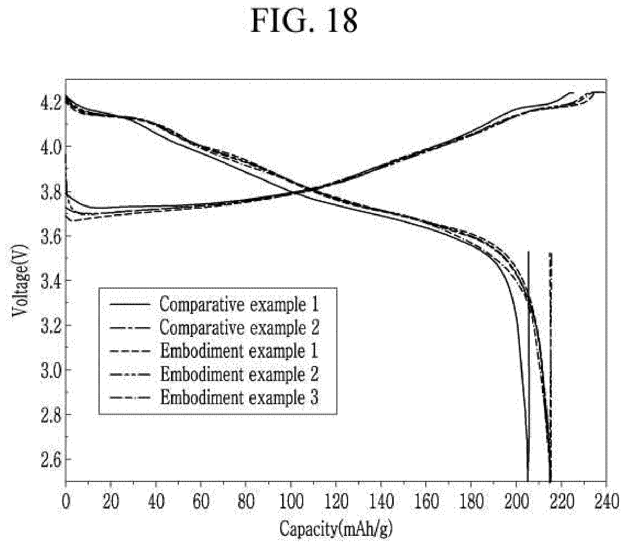

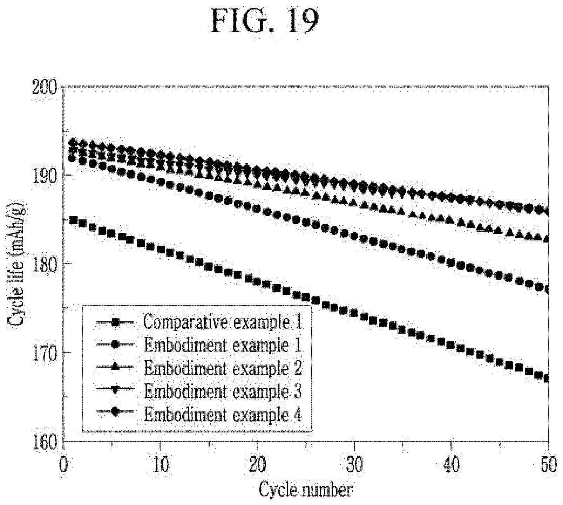

FIG. 17 is a graph comparing a dry H₃BO₃ coating with a TiO₂ semi-wet coating, and a semi-wet coating of a material of which TiO₂ and H₃BO₃ are mixed. FIG. 18 is a graph showing an initial capacity (0.2C) measured for a lithium rechargeable battery half coin cell. FIG. 19 is a graph representing a cycle lifetime measured for a lithium rechargeable battery half coin cell.

Referring to FIG. 17, in cases of a TiO₂ semi-wet coating and a semi-wet coating with a mixed material of TiO₂ and H₃BO₃ according to an exemplary embodiment of the present invention, it may be confirmed that resistance is reduced compared with a dry H₃BO₃ coating.

**(Table 2)**

| | Bare (Comparative Example 1) | H₃BO₃ dry coating (Comparative Example 2) | H₃BO₃ semi-wet coating (Example 1) | TiO₂ semi-wet coating (Example 2) | TiO₂ + H₃BO₃ semi-wet coating (Example 3) |
|---|---|---|---|---|---|
| Initial capacity (0.2C) | 205 mAh/g | 214.6 mAh/g | 214.0 mAh/g | 215.1 mAh/g | 214.8 mAh/g |
| Cycle lifetime 50^{th} | 90.4 % | 92.3 % | 94.8 % | 96.6 % | 96.0 % |

Referring to Table 2, and FIG. 18 and FIG. 19, an initial capacity of the case (Example 1) of the H₃BO₃ semi-wet coating, the case (Example 2) of the TiO₂ semi-wet coating, and the case (Example 3) of the semi-wet coating with the mixed material of TiO₂ and H₃BO₃ manufactured according to an exemplary embodiment of the present invention is similar to the case of the H₃BO₃ dry coating (B). However, it may be confirmed that a cycle lifetime (50 times) of the case (Example 1) of the H₃BO₃ semi-wet coating, the case (Example 2) of the TiO₂ semi-wet coating, and the case (Example 3) of the semi-wet coating with the mixed material of TiO₂ and H₃BO₃ are larger compared with cases of a state (Bare (Comparative Example 1)) without performing the coating and the H₃BO₃ dry coating (Comparative Example 2).

### Example 4

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including Ti is manufactured by the same method as (2) of Example 1 except for coating Ti at 1000 ppm with reference to the entire coating layer in the final positive active material.

### 2. Manufacturing of a lithium rechargeable battery

A lithium rechargeable battery half coin cell of the CR2032 standard is manufactured by the same method as Example 1 (2) by using the positive active material formed with the coating layer including Ti.

### Example 5

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including Ti is manufactured by the same method as (2) of Example 1 except for coating Ti at 2000 ppm with reference to the entire coating layer in the final positive active material.

### 2. Manufacturing of a lithium rechargeable battery

A lithium rechargeable battery half coin cell of the CR2032 standard is manufactured by the same method as Example 1 (2) by using the positive active material formed with the coating layer including Ti.

### Example 6

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including Ti is manufactured by the same method as (2) of Example 1 except for coating Ti at 3000 ppm with reference to the entire coating layer in the final positive active material.

### 2. Manufacturing of a lithium rechargeable battery

A lithium rechargeable battery half coin cell of the CR2032 standard is manufactured by the same method as Example 1 (2) by using the positive active material formed with the coating layer including Ti.

### Example 7

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including Ti is manufactured by the same method as (2) of Example 1 except for coating Ti at 4000 ppm with reference to the entire coating layer in the final positive active material.

### 2. Manufacturing of a lithium rechargeable battery

A lithium rechargeable battery half coin cell of the CR2032 standard is manufactured by the same method as Example 1 (2) by using the positive active material formed with the coating layer including Ti.

### Example 8

### 1. Manufacturing of a positive active material formed with a coating layer

### (1) Manufacturing of a positive active material

A positive active material is manufactured in the same method as (1) of Example 1.

### (2) Manufacturing of a final positive active material

For the positive active material manufactured in (1), the final positive active material formed with the coating layer including Ti is manufactured by the same method as (2) of Example 1 except for coating Ti at 5000 ppm with reference to the entire coating layer in the final positive active material.

### 2. Manufacturing of a lithium rechargeable battery

A lithium rechargeable battery half coin cell of the CR2032 standard is manufactured by the same method as Example 1 (2) by using the positive active material formed with the coating layer including Ti.

### Experimental Example 2

For the lithium rechargeable battery manufactured according to Examples 1 to 8 and Comparative Examples 1 and 2, various characteristics are evaluated in the following conditions and are shown in a following Table 3.
- 215 mAh/g as a reference capacity and a charge and discharge condition of CC/CV 2.5-4.25 V, cut-off of 1/20C, are applied
- initial capacity evaluation: after 0.1C charging/0.1C discharging, the 0.2C charging/0.2C discharging is performed.
- output characteristic evaluation: a C-rate increases through 0.1C, 0.2C, 0.5C, 1C, 1.3C, and 2C, and a discharge capacity is measured

- high temperature cycle lifetime characteristic evaluation: at a high temperature of 45 °C and a 4.25 V-2.5 V potential region, a charge and discharge cycle is performed 30 times with a condition of a 0.3C charge/0.3C discharge
- DC internal resistance (Direct Current, Internal resistance: DC-IR) evaluation: a charge and discharge cycle is performed at a high temperature of 45 °C, a discharge current in a 4.25 V charge at 100 % is applied and then a voltage is measured after 60 seconds, after converting an initial DC-IR value to 0 and proceeding 30 cycles, an increase rate of the DC-IR value is converted into a percentage and expressed.

For the lithium rechargeable battery manufactured according to Examples 1 to 8 and Comparative Examples 1 and 2, a residual lithium content of a surface is measured by an acid-base titration method using a 0.1 mol% HCI solution and is shown in Table 3 below.

**(Table 3)**

| | Initial discharge capacity | 1st DCIR | 30th DCIR | DCIR increase rate DELETEDTEXTS | 45 °C cycle lifetime | Residual LiOH | Residual Li₂CO₃ |
|---|---|---|---|---|---|---|---|
| | (mAh/g) | (Ω) | (Ω) | (1-30, %) | (@30th, %) | (ppm) | (ppm) |
| Comparative Example 1 | 205 | 12.6 | 23.9 | 89.7 | 83.3 | 9,052 | 9,677 |
| Comparative Example 2 | 214.6 | 19.4 | 38.2 | 96.9 | 92.8 | 2,583 | 1,829 |
| Example 1 | 214 | 16.5 | 35 | 112.1 | 92.3 | 2,121 | 1,750 |
| Example 2 | 215.1 | 13.6 | 23.5 | 72.8 | 94.6 | 2,477 | 2,055 |
| Example 3 | 214.8 | 12.6 | 21.4 | 69.8 | 95.3 | 2,780 | 1,985 |
| Example 4 | 212.6 | 11.1 | 18.6 | 67.6 | 95.3 | 977 | 3,034 |
| Example 5 | 214.2 | 10.8 | 17.6 | 63.0 | 95.6 | 2,994 | 2,081 |
| Example 6 | 215.1 | 12.4 | 22.6 | 82.3 | 95.4 | 2,477 | 2,055 |
| Example 7 | 215.5 | 14.5 | 26 | 79.3 | 96.2 | 3,069 | 2,785 |
| Example 8 | 213 | 15 | 28.9 | 92.7 | 97.1 | 3,754 | 1,988 |

Referring to Table 3, in the lithium rechargeable battery of Examples 1 to 8, it may be confirmed that the initial capacity, the DCIR increase rate, and the residual lithium content are all low, and the initial discharge capacity and the high temperature cycle lifetime are excellent.

In contrast, for the positive active material of Comparative Example 1, it may be confirmed the initial resistance value is low, the high temperature lifetime characteristic and the residual lithium content is very high compared with the exemplary embodiments.

Also, in the case of the Comparative Example 2, it may be confirmed that the initial DC internal resistance value (DCIR) and the DC internal resistance value (DCIR) after 30 cycles are higher compared with Examples 1 to 8.

Accordingly, as shown in Examples 1 to 8, it may be confirmed that the electrochemical characteristic of the lithium rechargeable battery adopting the positive active material in which the coating layer is formed by the semi wet method is excellent.

### Experimental Example 3

For the final positive active material manufactured according to Examples 1 to 8 and the Comparative Examples 1 and 2, differential scanning calorimeter (DSC) thermal stability is measured. The DSC evaluation is performed by using Au-plated HP cell (15 MPa) of Mettler Toledo company, and a result is shown in Table 4.

In detail, an electrolyte solution (a mass ratio of a positive active material and an electrolyte solution = 1:2) is added to the positive active material manufactured in Examples 1 to 8 and Comparative Examples 1 and 2 and then the DSC evaluation is performed. A measuring range is from 150 °C to 350 °C.

**(Table 4)**

| | DSC Onset temp. (°C) | DSC Peak temp. (°C) |
|---|---|---|
| Comparative Example 1 | 209.1 | 215.3 |
| Comparative Example 2 | 213.0 | 219.2 |
| Example 1 | 214.8 | 221.9 |
| Example 2 | 217.7 | 223.7 |
| Example 3 | 215.6 | 223.1 |
| Example 4 | 215.6 | 222.0 |
| Example 5 | 216.0 | 221.3 |
| Example 6 | 217.7 | 223.7 |
| Example 7 | 216.8 | 223.9 |
| Example 8 | 218.6 | 224.5 |

Referring to Table 4, it may be confirmed that the thermal stability for the positive active material of Examples 1 to 8 is excellent as a whole compared with the positive active material of Comparative Examples 1 and 2.

### Experimental Example 4

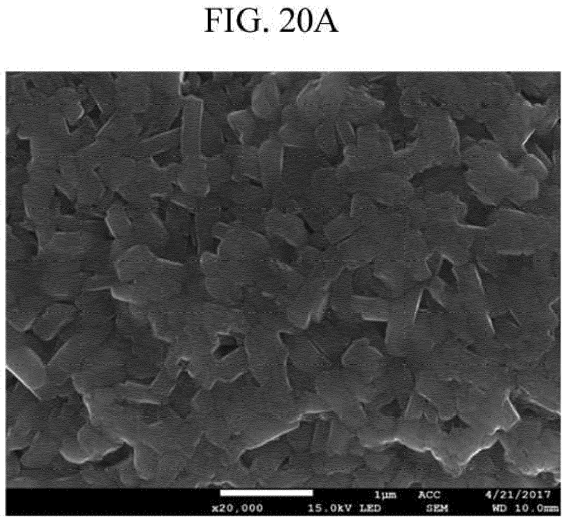

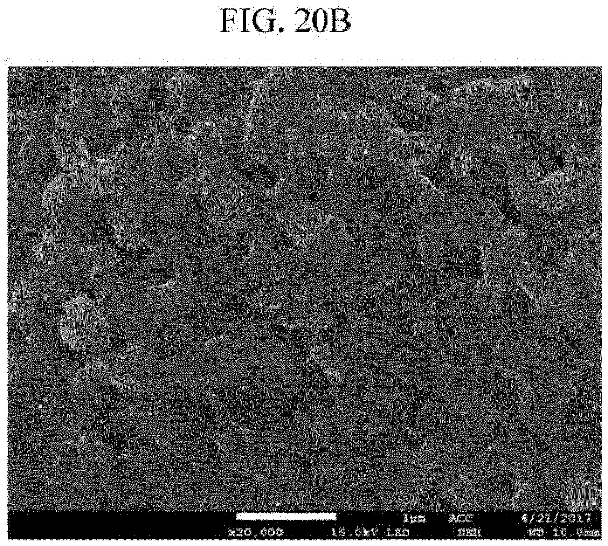

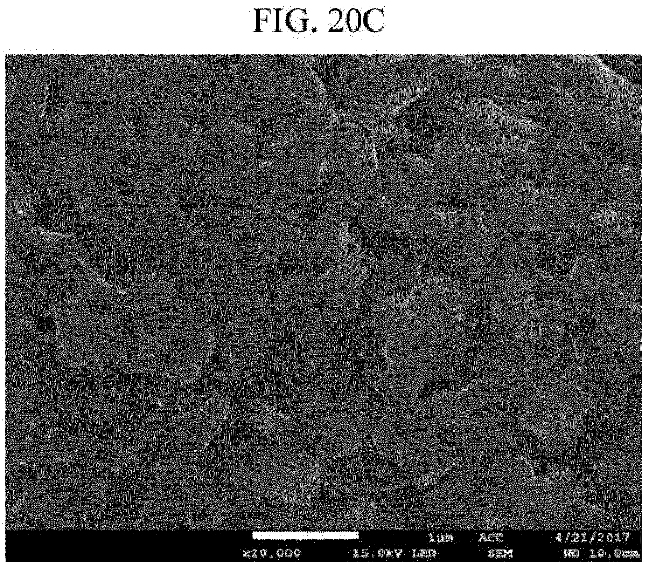

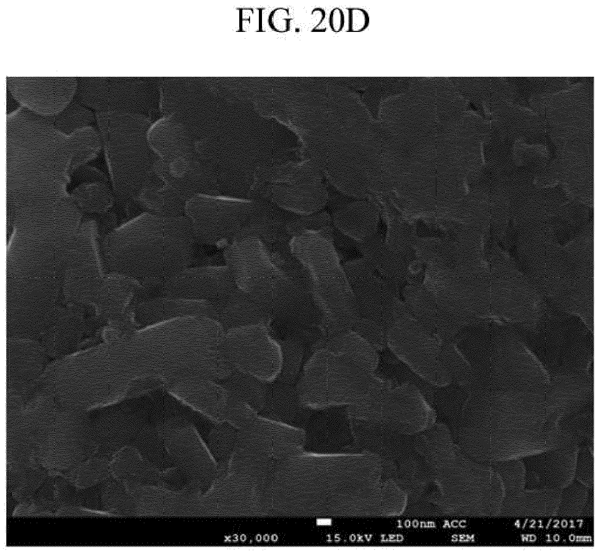

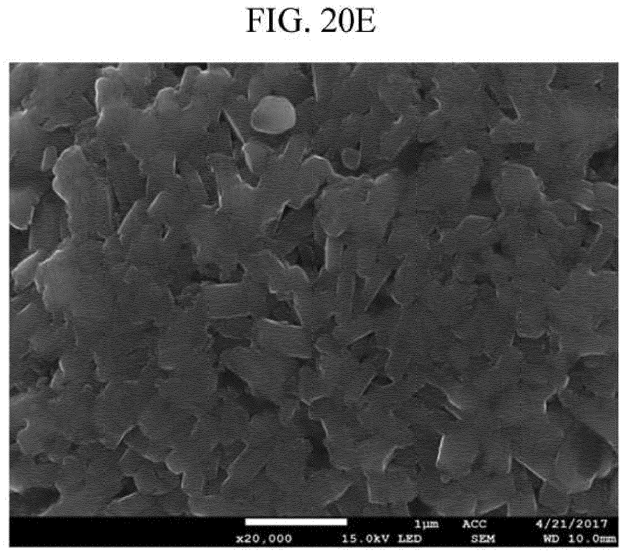

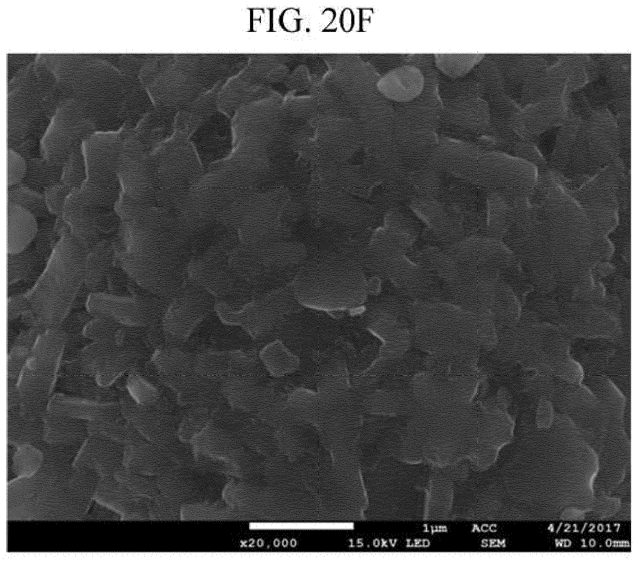

FIG. 20A to FIG. 20F represent a result of surface SEM analysis of a positive active material manufactured according to Example 2 and Examples 4 to 8.

Referring to FIG. 20A to FIG. 20F, like the present exemplary embodiment, in the positive active material forming the coating layer by using the semi-wet coating method, it may be confirmed that the uniform coating layer is formed.

### Experimental Example 5

By using the manufacturing apparatus of the positive active material according to the present exemplary embodiment, it is tested whether the uniform coating layer was formed by injecting 1 kg of the positive active material.

The detailed experimental conditions are as follows.

**(Table 4)**

| Traveling speed of Blade end | Coating solution transferring speed | coating time |
|---|---|---|
| 1-50 m/s | 1-500 ml/min. | 10 s-30 min. |

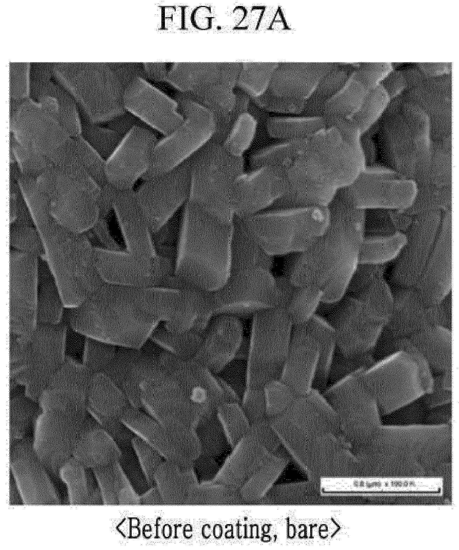

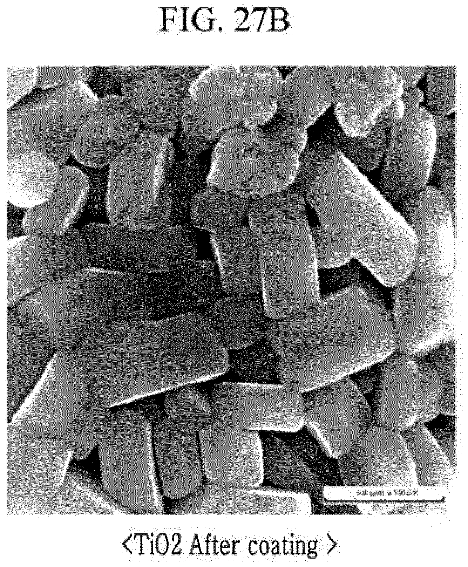

Referring to FIG. 27A and FIG. 27B, in the state after TiO₂ as the coating material is coated on the positive active material according to the active material manufacturing apparatus for the rechargeable battery of the present invention compared with the state before the coating, it may be confirmed that it is more uniformly coated on the positive active material.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A positive active material manufacturing method comprising:
a step of preparing a lithium-containing compound;
a step of manufacturing a coating liquid including at least one coating element;
a step of mixing the lithium-containing compound and the coating liquid to form a coating mixture of a clay or slurry state; and
a step of agitating the coating mixture.

2. The positive active material manufacturing method of claim 1, wherein
the step of forming the coating mixture includes a step of spraying the coating liquid to a mixer into which the lithium-containing compound is added.

3. The positive active material manufacturing method of claim 2, wherein
a speed for spraying the coating liquid to the mixer is 40 ml/min to 100 ml/min.

4. The positive active material manufacturing method of claim 2, wherein
after the step of spraying the coating liquid is finished, a weight ratio of the lithium-containing compound to the coating liquid is 100:10 to 100:30.

5. The positive active material manufacturing method of claim 2, wherein
in the step of agitating the coating mixture, the mixer is rotated.

6. The positive active material manufacturing method of claim 1, wherein
the clay state or the slurry state is formed by a rotation speed of a rotator of a coating apparatus.

7. The positive active material manufacturing method of claim 1, wherein:
the positive active material has a structure in which a coating layer including an oxide compound is included in the lithium-containing compound surface.

8. The positive active material manufacturing method of claim 7, wherein
the coating layer has a thickness of greater than 0.001 micrometers and less than 1 micrometer.

9. The positive active material manufacturing method of claim 7, wherein
an element contained in the oxide compound has a concentration gradient that gradually decreases from the surface of the positive active material toward the center.

10. The positive active material manufacturing method of claim 1, further comprising
heat-treating the agitated coating mixture,
wherein the heat treatment is performed at a temperature of 200 degrees Celsius to 700 degrees Celsius for 3 hours to 10 hours.

11. The positive active material manufacturing method of claim 1, wherein:
the coating element included in the coating liquid is at least one selected from a group consisting of Zr, Al, Na, K, Mg, Ca, Sr, Ni, Co, Ti, B, Sn, Mn, Cr, Fe, and V.

12. The positive active material manufacturing method of claim 11, wherein
the coating liquid includes H₃BO₃ or a mixture of H₃BO₃ and TiO₂.

13. An active material manufacturing apparatus for a rechargeable battery, comprising:
a rotation container rotating itself in any one direction and receiving and flowing a raw material of at least one kind or more;
a cover installed at an upper part of the rotation container and covering the rotation container;
a nozzle installed at the upper end of the cover and spraying the coating solution to the raw material in the rotation container; and
an agitation wing installed at the inner surface of the cover and rotated in the rotation container to agitate the raw material in the rotation container and the coating solution,
wherein the rotation container is controlled at an angle in a range of 0 degrees to 45 degrees.

14. The active material manufacturing apparatus for the rechargeable battery of claim 13, wherein
the raw material includes a positive active material of a rechargeable battery or a negative active material of a rechargeable battery.

15. The active material manufacturing apparatus for the rechargeable battery of claim 14, wherein
the raw material is formed of a powder in a dry or wet state.

16. The active material manufacturing apparatus for the rechargeable battery of claim 15, wherein
the positive active material includes a nickel-cobalt-manganese (NCM) series including nickel (Ni) at 25-99 mol%, cobalt (Co) at 0.1-40 mol%, and manganese (Mn) at 0.1-40 mol%, and at least one among compounds expressed by following Formulas 1 to 13:
LiₓMn_{1-y}M'_{y}A₂ (1)
LiₓMn_{1-y}M'_{y}O_{2-z}X_{z} (2)
LiₓMn₂O_{4-z}X_{z} 93)
LiₓMn_{2-y}M'_{y}A₄ (4)
LiₓCo_{1-y}M'_{y}A₂ (5)
LiₓCoO_{2-z}X_{z} (6)
LixNii-yM'yA2 (7)
LiₓNiO_{2-z}X_{z} (8)
LiₓNi_{1-y}Co_{y}O_{2-z}X_{z} (9)
LiₓNi_{1-y-z}Co_{y}M'_{z}A_{α} (10)
LiₓNi_{1-y-z}Co_{y}M'_{z}O_{2-α}X_{α} (11)
LiₓNi_{1-y-z}Mn_{y}M'_{z}A_{α} (12)
LiₓNi_{1-y-z}Mn_{y}M'_{z}O_{2-α}X_{α} (13)
(in the above Formulas (1) to (13), 0.95 ≤ x ≤ 1.1, 0 ≤ y ≤ 0.5, 0 ≤ z ≤ 0.5, 0 < α ≤ 2, M' is at least one element selected from a group consisting of Al, Ni, Co, Mn, Cr, Fe, Mg, Sr, V, Sc, Y, and lanthanide elements, A is at least one element selected from a group consisting of O, F, S, and P, and X is at least one selected from a group consisting of F, S, and P).

17. The active material manufacturing apparatus for the rechargeable battery of claim 13, wherein
an opened part where a raw material may be added is formed at the upper end of the rotation container.

18. The active material manufacturing apparatus for the rechargeable battery of claim 17, wherein
a container supporter for supporting the rotation container to be rotatable is installed at the lower part of the rotation container.

19. The active material manufacturing apparatus for the rechargeable battery of claim 18, wherein
an opening/closing apparatus for opening and closing the cover is installed at the cover, and
the opening/closing apparatus includes a vertical coupling member coupled vertically to both sides of the upper end of the container supporter and a cover opening/closing part coupled with the upper end of the cover and coupled between vertical coupling members to be rotatable by a hinge shaft.

20. The active material manufacturing apparatus for the rechargeable battery of claim 19, wherein
a coupling hole where the nozzle is inserted and coupled is formed at the upper end of the cover.

21. The active material manufacturing apparatus for the rechargeable battery of claim 20, wherein
the nozzle is connected to a coating solution storage vessel in which the coating solution is stored by a supply pipe, and the nozzle is attachable and detachable.

22. The active material manufacturing apparatus for the rechargeable battery of claim 21, wherein
a pump for pressurizing and supplying the coating solution is installed at the supply pipe, and the pump is attachable and detachable.

23. The active material manufacturing apparatus for the rechargeable battery of claim 21, wherein
the coating solution includes one or two or more kinds selected from a group consisting of Ni, Co, Fe, Mn, V, Cr, Ti, Ta, Ma, B, Mg, Al, Cr, V, Ti, Fe, Zr, Zn, Si, Y, Nb, Ga, Sn, Mo, and W.

24. The active material manufacturing apparatus for the rechargeable battery of claim 23, wherein
a ratio of a coating material to a solvent in the coating solution is 0.1 to 10 wt% of the coating material to 100 wt% of the solvent.

25. The active material manufacturing apparatus for the rechargeable battery of claim 19, wherein
an agitation rotation shaft for rotating the agitation wing is installed at the upper end of the cover, and
a driving motor for driving the agitation rotation shaft is installed at the agitation rotation shaft.

26. The active material manufacturing apparatus for the rechargeable battery of claim 25, wherein
the agitation wing is rotated in an opposite direction to a rotation direction of the rotation container.

27. The active material manufacturing apparatus for the rechargeable battery of claim 24, wherein:
the coating solution includes a titanium dioxide (TiO₂) or boric acid (H₃BO₃) solution which is dissolved in ethanol (EtOH), an inorganic solvent, an organic solvent, or water (H₂O).

28. The active material manufacturing apparatus for the rechargeable battery of claim 13, wherein
the agitation wing is installed in plural along a spiral line at the outer surface of the agitation rotation shaft.

29. The active material manufacturing apparatus for the rechargeable battery of claim 13, wherein
the agitation wing is installed radially on the outer surface of a circular plate member extending in an outer direction at the outer surface of the agitation rotation shaft.

30. The active material manufacturing apparatus for the rechargeable battery of claim 29, wherein
an auxiliary blade formed to be protruded downward or upward at the upper surface or the lower surface of the agitation wing is included.
